Europäisches Patentamt

European Patent Office

Office européen des brevets

(11) Publication number: **0 120 975**
**B1**

(12) **EUROPEAN PATENT SPECIFICATION**

(45) Date of publication of patent specification: **16.01.91**

(21) Application number: **83903201.8**

(22) Date of filing: **07.10.83**

(86) International application number:
**PCT/JP83/00333**

(87) International publication number:
**WO 84/01631 26.04.84 Gazette 84/11**

(51) Int. Cl.⁵: **G 05 B 19/18, G 06 F 9/06**

(54) **NUMERICAL CONTROLLING DEVICE AND METHOD.**

(30) Priority: **08.10.82 JP 177108/82**

(43) Date of publication of application:
**10.10.84 Bulletin 84/41**

(45) Publication of the grant of the patent:
**16.01.91 Bulletin 91/03**

(84) Designated Contracting States:
**CH DE FR GB LI**

(56) References cited:
**EP-A- 27 317**
**EP-A-0 067 875**
**EP-A-0 078 326**
**EP-A-0 092 977**
**JP-A-5 486 887**
**JP-A-56 153 462**

**TRS-80 Model II, Operation Manual, 1979, Radio Schack, Tandy Corporation, Fort Worth, Texas 76102, U.S.A.**

(73) Proprietor: **FANUC LTD.**
**3580, Shibokusa Aza-Komanba, Oshino-mura Minamitsuru-gun, Yamanashi 401-05 (JP)**

(72) Inventor: **MATSUI, Mitsuo**
**1-12-17, Higashi Nakano Nakano-ku**
**Tokyo 164 (JP)**
Inventor: **MATSUMURA, Teruyuki**
**38-8, Matsugaya Hachioji-shi**
**Tokyo 192-03 (JP)**
Inventor: **YUKUTOMO, Masashi**
**1-10-5, Nishi Hashimoto Sagamihara-shi**
**Kanagawa 229 (JP)**

(74) Representative: **Billington, Lawrence Emlyn et al**
**HASELTINE LAKE & CO Hazlitt House 28 Southampton Buildings Chancery Lane London WC2A 1AT (GB)**

Courier Press, Leamington Spa, England.

## Description

Technical Field

This invention relates to a computerized numerical control apparatus for numerically controlling an electric discharge machine, machine tool or the like. More particularly, the invention relates to a numerical control apparatus and method for protecting firmware for machine control, such as parameters and machining programs, set by the maker in accordance with the machine to be controlled.

Background Art

Numerical control apparatus (referred to hereinafter as NC apparatus) are utilized in applying numerical control to a variety of machines and are finding use in ever widening-fields. NC apparatus have come to be computerized and are capable of implementing a variety of functions via software. Recent NC apparatus possess a parameter control function in addition to the basic control software. Machine tool and electric discharge machine manufacturers, which purchase the NC apparatus from the NC manufacturer, enter and set, in the form of parameters, their own machine control conditions best suited for the machine to which the NC apparatus is to be connected, thereby achieving the optimum NC specifications. Similarly, NC apparatus having a user macro function have been developed and permit optimum NC specifications to be realized by permitting a specialized machining program, which is oriented to the machine connected to the NC apparatus, to be achieved in the form of firmware.

The foregoing trends will become even more pronounced as the tendency toward developing general-purpose NC apparatus moves forward, and it will be necessary to provided such apparatus with an abundance of parameter and user macro functions. It has also become important for machine tool and electric discharge machine manufacturers to draw the attention of users through further improvements in NC functions achieved by exploiting these parameter and user macro functions to set, and realize as firmware, optimum control conditions tailor made for the machine connected to the NC apparatus.

These parameters and user macros include, if one takes an electric discharge machine as an example, feed speed when performing machining by a machining electrode, retraction speed for retraction when a short-circuit occurs, forward speed for resumption of forward motion following termination of the short-circuit, other NC parameters of a general nature (rapid-traverse speed), and machining electrode oscillation conditions. All of these items represent the know-how accumulated by the maker of an electric discharge machine or machine tool and distinguish his NC apparatus from those of other makers by reason of the fact that the unique specifications of the NC apparatus are realized through such know-how.

There is the danger that the leakage of the parameters and user macros constituting such know-how to a third party will result in the revelation and misappropriation of the know-how. Such leakage of parameters and user macros becomes all the more likely owing to the trend toward NC apparatus of a general-purpose nature. Some means of coping with this situation is desired.

Accordingly, an object of the present invention is to provide a numerical control apparatus capable of protecting parameters and user macros against unlawful misappropriation and erroneous settings by a third party.

Attention is directed to EP—A1—0 092 977 and EP—A1—0 078 326, which form part of the state of the art by virtue of Article 54(3) EPC.

TRS-80 Model II, Operation Manual, First Edition — 1979, Radio Shack, A Division of Tandy Corporation, Fort Worth, Texas 76102, U.S.A., discloses, in the context of TRSDOS, the use of passwords to protect files from unauthorised access.

EP—A2—0 027 317 discloses a numerically controlled machine tool, a sequence controller of which has a non-volatile memory with two storage areas for operation commands. Only when the operation commanded by such a command has actually been completed is the command stored in the second storage area. Upon restoration of power after a power interruption, examination of the second storage area indicates which commands have been completed.

EP—A1—0 067 875 discloses a system which, for instance, allows an archival copy of a numerical control program to be stored in an external memory medium. The copy in the external memory medium includes a code. The copy can then only be loaded back into a memory of a numerical control apparatus for execution of the program, if a special code present for the apparatus agrees with the code in the external memory medium.

Disclosure of the Invention

According to the present invention there is provided a numerical control apparatus having
a processor,
a program memory storing a numerical control program, and
a data memory storing data for control,
said data memory storing numerical control data and having a parameter area for storing a machining program programmed in the form of parameters or user macros, there being provided, in the parameter area, a security area for storing a secret number, and a forbidden instruction area for storing instructions the execution of which can be conditional upon the entry of an input number agreeing with said secret number,
the apparatus further including means enabling a user to enter the input number.

According to the present invention there is provided a numerical control method, for executing numerical control in accordance with a control program, on numerical control apparatus comprising:-

a processor,

a program memory storing a numerical control program, and

a data memory storing data for control,

in which method said data memory stores numerical control data and has a parameter area storing a machining program programmed in the form of parameters or user macros, there being provided, in the parameter area, a security area storing a secret number, and a forbidden instruction area storing instructions the execution of which can be conditional upon the entry by a user of an input number agreeing with said secret number.

In an embodiment of the invention a processor and memories for storing a control program and machining control information are provided. Utilizing the machining control information, the processor processes machining data, entered from an external unit, in accordance with the control program to numerically control a machine connected thereto. When an input number agrees with a secret number stored in the memory, an instruction relating to the machining control information is executed. According to the present invention, reading and erroneous setting of machining control information by one not knowing the secret number can be prevented, and the machining control information can be protected from a third party.

Brief Description of the Drawings

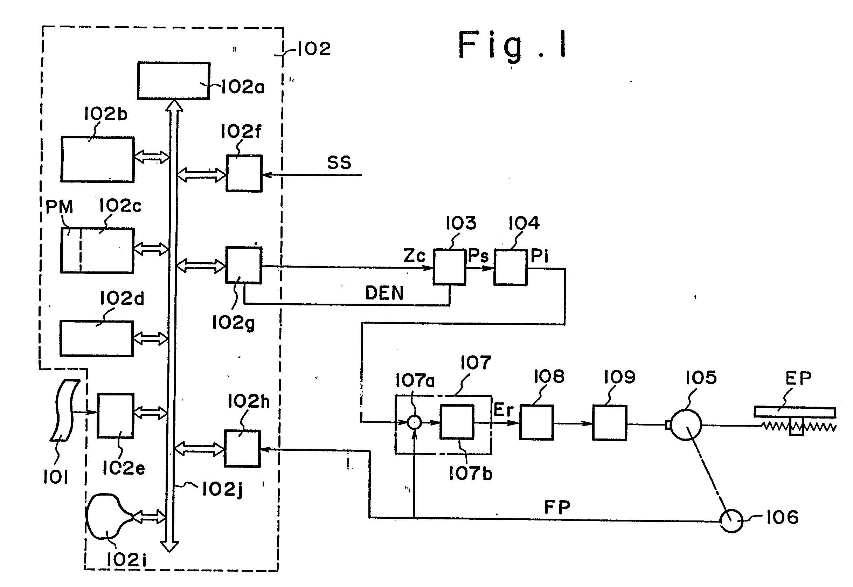

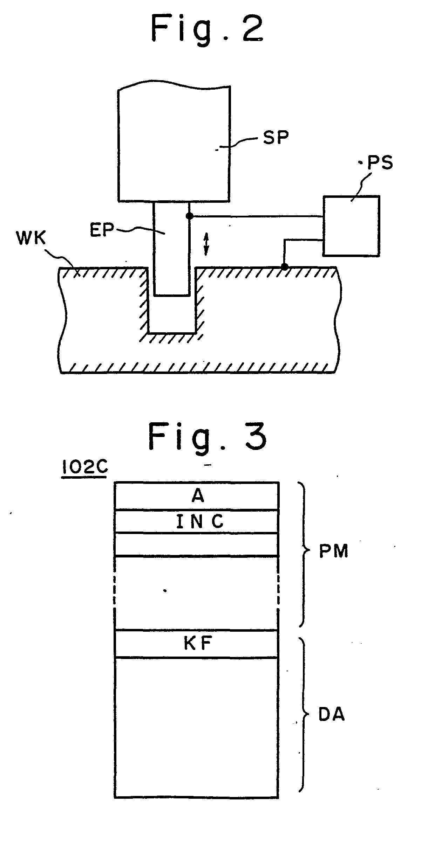

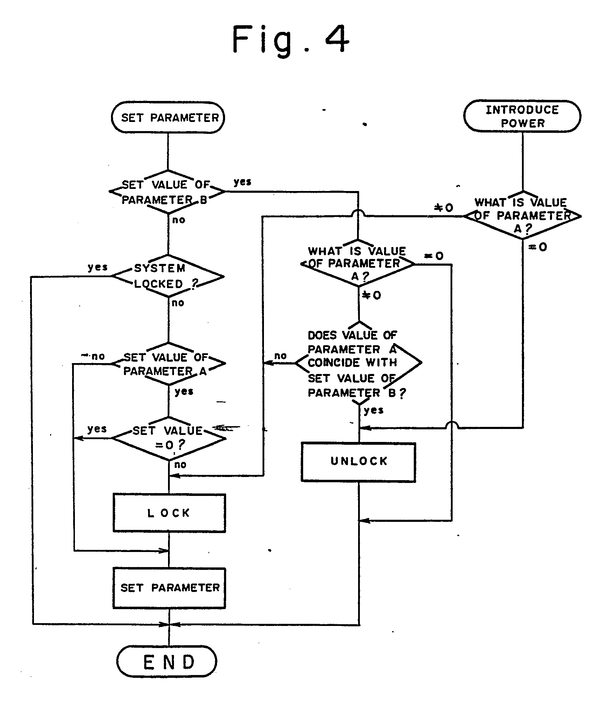

Fig. 1 is a view showing the construction of an embodiment of the present invention, Fig. 2 is a view showing the construction of an electric discharge mechanism in the arrangement of Fig. 1, Fig. 3 is a view showing the configuration of a memory in the arrangement of Fig. 1, and Fig. 4 is a flowchart of processing according to the present invention.

Best Mode for Carrying Out the Invention

An embodiment of the present invention will now be described in detail.

Fig. 1 is a block diagram of an embodiment of the present invention, in which a numerical control apparatus is applied to a die-sinking electric discharge machine.

In the Figure, numeral 101 denotes a paper tape bearing punched numerical control (NC) command data. Specifically, the paper tape 101 stores NC command data such as positioning information for machining and M-, S- and T-function information. Numeral 102 denotes a numerical control (NC) apparatus which causes a tape reader, described below, to read in the NC data from the paper tape 101, and which decodes the read NC data, delivering, e.g., M, S and T function instructions to the machine side through a magnetics panel, not shown, when the data is indicative of such instructions, and a move command $Z_c$ to a pulse distributor, which is the succeeding stage, when the data is indicative of such a command. The NC apparatus 102 is composed of a processor 102a for executing processing in accordance with a control program, a program memory 102b for storing a prescribed control program, a data memory 102c for storing data, an operator's panel for operator control, a tape reader/puncher 102e, input/output ports 102f, 102g, a present position counter 102h, a display unit 102i, and an address/data bus 102j interconnecting the foregoing items.

The program memory 102b is constituted by a read-only memory (ROM) or by a non-volatile memory and stores a numerical control program for numerically controlling a machine. By way of example, for an electric discharge machine, the program memory 102b would store a machining control program for controlling machining electrode feed, table feed and machining voltage, etc. The machining control program may of course contain a program for retraction control in addition to one for forward control of machining. The data memory 102c is composed of a non-volatile memory which, in addition to storing NC data (such as machining position data) from the paper tape 101, stores a programmed machining program in an area PM in the form of parameters or user macro. Typical parameters are as follows, taking an electric discharge machine as an example:

(1) feed speed when machining is performed by the electrode;

(2) retraction speed when a short circuit develops between the electrode and a workpiece;

(3) forward speed for resumption of forward motion following termination of the short-circuit;

(4) a position at which a changeover is made from the resumed forward speed following termination of the short-circuit to a speed for forward machining (i.e, distance from a position at which the short-circuit was sensed)

(5) maximum possible retraction distance of electrode;

(6) machining advance speed for determining whether machining is possible;

(7) a short-circuit addition value for effecting automatic jumping of the electrode;

(8) other parameters for NC (rapid-traverse speed, an upper limit value on cutting feed speed, acceleration/deceleration time constant, a backlash correction value, a pitch error correction value, etc.); and

(9) machining voltage, current, pulse ON time/ OFF time.

Typical of a machining program is an electrode oscillation program or a machining procedure. A machining program programmed to include such parameters and user macros is read out, together with execution of the control program, as the parameters or subroutine programs of the control program in the program memory 102b, and constitutes part of the control program.

Numeral 103 denotes a pulse distributor which executes well-known pulse distribution computations on the basis of the move command $Z_c$, and generates distributed pulses $P_s$ at a frequency

corresponding to a commanded speed. Numeral 104 designates a known accelerator/decelerator circuit which generates a train of pulses $P_i$ by rectilinearly or exponentially accelerating the pulse rate of the train of distributed pulses $P_s$ at the occurrence of this pulse train and by rectilinearly or exponentially decelerating the same at the end thereof. Numeral 105 indicates a D.C. motor by which an electrode EP is fed for machining. Numeral 106 denotes a pulse coder which generates one feedback pulse FP each time the DC motor rotates by a predetermined amount. Numeral 107 denotes an error calculating and storing unit which is constructed of, for example, a reversible counter, and which stores a difference $E_r$ between the number of the input pulses $P_i$ generated by the accelerator/decelerator circuit 104 and that of the feedback pulses FP. This error calculating and storing unit may be constructed, as shown in the Figure, of an arithmetic circuit 107a for calculating the difference $E_r$ between $P_i$ and FP, and an error register 107b for storing $E_r$. More specifically, assuming that the DC motor 105 is rotating in the forward direction in accordance with a command causing the DC motor 105 to rotate in this direction, the error calculating and storing unit 107 operates in such a manner that each time the input pulse $P_i$ is generated, said pulse is counted up, while each time the feedback pulse FP is generated, the content is counted down, and that the difference $E_r$ between the number of input pulses and the number of feedback pulses is stored in the error register 107b. Numeral 108 denotes a digital-analog DA converter for generating an analog voltage proportional to the content of the error register 107b. Numeral 109 denotes a speed control circuit. It should be noted that the DA converter 108 and speed control circuit 109 construct a motor drive circuit. EP represents the machining electrode of an electric discharge machine. In the electric discharge machine, as shown in Fig. 2, an electrode EP serving as a punch is supported by a spindle SP, and is fed for machining in the direction of the arrow by the servomotor 105 (Fig. 1). A voltage is applied by a power source PS across the electrode EP and a workpiece WK, which is to be machined into a die. Accordingly, when the electrode EP is advanced for machining while a minute gap is maintained between the workpiece WK and the electrode EP, the workpiece WK is machined into a shape similar to that of the electrode EP. An enlarged bore of desired size can be readily machined in the workpiece WK by controlling, e.g., the machining pulses and energy. If necessary, the machining operation is carried out while the electrode EP is being moved in eccentric fashion, whereby an enlarged bore of desired dimensions can be machined.

The operation of the arrangement embodied in Fig. 1 will now be described.

First, prior to machining, NC data is read from the paper tape 101 by thetape reader/puncher 102e, and the NC data from the paper tape 101 is stored in the data memory 102c via the bus 102j.

Next, when a start command is applied to the processor 102a via the bus 102j by manipulating the operator's panel 102d, the processor 102a successively reads and executes the machining control program stored in the program memory 102b. Specifically, required parameters (NC parameters, feed speed, machining voltage, etc.) are read out of the data memory 102c together with the NC data, an X-axis move command $X_c$ and Y-axis move command Yc are created for moving a table (not shown) in X and Y directions, and these commands are delivered to a table drive unit through an input/output port (not shown), whereby the table is positioned. It should be noted that an arrangement equivalent to the route extending from the input/output port 102g to the servomotor 105 is provided for each of the X and Y axes, though not shown in Fig. 1. The Z-axis move command $Z_c$ is created in similar fashion, and the M-, S- and T-functions are delivered to the machine side through the input/output port 102f. The move command $Z_c$ is delivered to the input/output port 102g via the bus 102j. When the move command is applied to the pulse distributor 103 from the input/output port 102g, the pulse distributor 103 produces distributed pulses $P_s$ by performing a pulse distribution operation based on the move command $Z_c$. Upon receiving the pulses $P_s$, the accelerator/decelerator circuit 104 accelerates and decelerates the pulse rate thereof and applies the train of command pulses $P_i$ to the error calculating and storing circuit 107. Thus, the content of the error register 107b becomes non-zero, so that the DA converter 108 provides a voltage and the motor 105 is driven by the speed control circuit 109 so as to move the electrode EP. When the motor 105 has rotated by a predetermined amount, the feedback pulse FP is generated by the pulse coder 106 and is applied to the error calculating and storing unit 107. The difference $E_r$ between the number of commanded pulses $P_i$ and the number of feedback pulses FP is stored in the error register 107b. Thenceforth, the motor 105 is servo-controlled so as to make the error $E_r$ approach zero, whereby the electrode EP is fed for machining and moved toward a target position.

When the electrode EP is being fed for machining, a short-circuit signal SS is generated when the electrode EP contacts the workpiece. The short-circuit signal SS arrives at the input/output port 102f and is communicated to the processor 102a through the bus 102j. The processor 102a halts a machining feed control program included in the machining control program and then proceeds to read and execute a retraction control program in the program 102b. Specifically, after the present position in the present position counter 102h is stored in the data memory 102c, a retraction control parameter is read out of the data memory 102c, a retraction move command is created, and the retraction move command, which is for retracting the electrode EP, is delivered to the pulse distributor 103. In response, the pulse distributor 103 generates retraction pulses BS for movement in the reverse direction, the content of the error register 107b becomes zero after a predetermined period of time, and the electrode EP is subsequently retracted by the retraction pulses to brake contact with the workpiece.

When contact between the electrode and workpiece is terminated, the short circuit-signal SS falls to a is, low level, this being sensed by the processor 102a via the input/output port 102f. When this occurs, the electrode EP is to be advanced again. To this end, a readvance command $Z_c$ is delivered to the pulse distributing circuit 103 via the bus 102j and input/output port 102g, the command being such as will return the electrode at a readvance speed to the present position, which is stored in the data memory 102c. Thus, the electrode EP is advanced up to the former position and is fed for further machining.

The foregoing example is a description relating to a parameter. However, a machining program created by a user macro would be executed in entirely the same manner.

In view of the fact the NC apparatus is constituted by a general-purpose computer, parameters or machining programs prepared by the NC maker and set by the machine maker can be externally accessed and read out on the user side. Therefore, according to the present invention, operation is performed in such fashion as to forbid an improper external read-out.

Fig. 3 is a view showing the configuration of a memory and is useful in describing the operation of the present invention.

The data memory 102c has a parameter area PM and a data area DA. The parameter area PM, besides storing a machining program created by the above-described parameters or user macros, includes a security area A for storing a secret number as a parameter, as well as an forbidden instruction area INC for storing a group of instructions which forbid access. The data area DA is provided with a flag area for indicating whether an unlocked state is in effect, thereby permitting access to a parameter or machining program or whether a locked state is in effect, thereby forbidding access to the parameter or machining program.

Examples of the instructions stored in the inhibited instruction area are (1) an instruction for setting or modifying a parameter by a machining program, (2) an instruction for displaying a parameter or machining program, (3) a parameter or machining program collation instruction (and instruction for collation with respect to the contents of a paper tape/auxiliary memory device), (4) a machining program editing instruction (for alteration, deletion, insertion, etc.), (5) an instruction for delivering an output of a parameter or machining program to a unit external to the NC apparatus, (6) an instruction for entering a parameter or machining program from a unit external to the NC apparatus, and (7) an instruction for deleting or clearing a parameter or machining program.

The operation of the present invention will now be described in conjunction with the flowchart of Fig. 4. We will assume that the security area A and flag area KF have been cleared beforehand, and that the instructions which forbid access have been stored in the forbidden instruction area INC. This is the state in which the NC maker delivers the NC apparatus to the machine maker. When electric power is introduced to the NC apparatus by the machine maker, the processor 102a executes a lock/unlock program contained in the control program. More specifically, the content of the security area A is read. If the content is zero (clear), this is taken as indicating an unlocked state, so that permission to access the parameter area PM is granted regardless of the forbidden instructions in the forbidden instruction area INC. The machine maker may therefore store a machining program in the parameter area PM by using the operator's panel 102d, paper tape 101 or paper tape reader/puncher 102e, which program is composed of various parameters or user macros indicative of the maker's own know-how. Next, to forbid access to the parameter area PM, a locking operation is performed. Accordingly, a secret number is entered from the operator's panel 102d. The processor 102a senses that a parameter B, described below, is not set, that the locked state is not effective (i.e., that the flag area KF is clear), and that the entered secret number is not zero, stores the entered secret number is the security area A, and sets a "1", which indicates the locked state, in the flag area KF.

Thus, access to the parameter area PM of the data memory 102c based on the above-described instructions is forbidden.

When the NC apparatus is delivered to the user in this form, the processor 102a, in response to an instruction from an external unit, senses that the locked state is in effect by scrutinizing the flag in the flag area KF, and then examines whether the instruction corresponds to an instruction in the forbidden instruction area INC. If it does, the processor does not execute the instruction.

Conversely, if there is no correspondence, the content of the parameter area PM is not delivered to the external unit and, hence, the instruction is executed.

On the other hand, even if the locked state is in effect, there are cases where it is necessary to alter the obstacle or parameters. In such cases it is necessary to unlock the apparatus and produce an output of or display the content of the parameter area PM. Accordingly, a parameter B is entered from the operator's panel 102d. The processor 102a compares the parameter B with the secret number in the security area A of the data memory 102c on the condition that the set secret parameter is not zero. If the parameter B and the secret number coincide, the flag in the flag area KF is cleared to indicate the unlocked state, thereby permitting, e.g, a read out from the parameter area PM. If the parameter B does not coincide with the secret number A, then the locked state remains in effect. Accordingly, the system cannot be unlocked unless one knows the secret code. In other words, only an authorized individual may access, produce an output of or alter the contents of the parameter area PM.

To relock the unlocked parameter area PM, a secret number different from that set as the parameter B is entered. When this is done, the locked state is established by the above-described comparison operation whereby a "1" is set in the flag area KF. Likewise, when the power supply is turned off and then turned on, the secret number is read out of the security area A and, since the number naturally will be non-zero, "1" will be set in the flag area KF to establish the locked state. The locked state is established even by setting a secret number different from that of the secret number in the security area A.

The example described above is one in which the system is unlocked by the NC maker and locked by the machine maker. However, it is also possible for the NC maker to set the secret number, lock the system and inform the machine maker of the secret number, who may then unlock the system, set the parameters and machining program and then relock the system. Further, while the entirety of the parameter area PM is locked in the description given above, an arrangement is possible wherein the addresses of the parameters and machining programs which are to be locked in the parameter area PM are stored in the data area DA of the data memory 102c so that specific parameters and machining programs in the parameter area PM may be locked.

According to the present invention as described above, in a numerical control apparatus having a processor and a memory, with the processor utilizing machining control information stored in the memory to process machining data in accordance with a control program stored in the memory, a secret number is stored in the memory and an instruction relating to machining control information is executed on the condition that an externally applied input agrees with the secret number. Therefore, the present invention prevents machining control information (machining know-how) from being read and erroneously set by one not knowing the secret number, thereby protecting the machining know-how by a third party.

While the present invention has been described in accordance with an embodiment thereof, the present invention is not limited to said embodiment but can be modified in various ways in accordance with the gist thereof without departing from the scope of the invention.

## Industrial Applicability

According to the present invention, a secret number is stored in a memory and an instruction relating to machining control information is executed on the condition that an externally applied input agrees with the secret number. Therefore, the present invention prevents machining control information from being read and erroneously set by one not knowing the secret number. Accordingly, the invention is well-suited for application to a computerized numerical control apparatus for controlling an electric discharge machine, a machine tool or the like.

## Claims

1. A numerical control apparatus having
a processor (102a),
a program memory (102b) storing a numerical control program, and
a data memory (102c) storing data for control,
said data memory (102c) storing numerical control data and having a parameter area (pM) for storing a machining program programmed in the form of parameters or user macros, there being provided, in the parameter area (PM), a security area (A) for storing a secret number, and a forbidden instruction area (INC) for storing instructions the execution of which can be conditional upon the entry of an input number agreeing with said secret number,
the apparatus further including means (102d) enabling a user to enter the input number.

2. Apparatus as claimed in claim 1, wherein the data memory (102c) has a data area (DA) including a flag area (KF) storing flag data, the apparatus being operable such that when the flag data has a first value, indicating an "unlocked" state, the instructions in the forbidden instruction area (INC) can be executed regardless of agreement or non-agreement between the secret number and the input number entered by the user, whereas when the flag data has a second value, indicating a "locked" state, agreement is necessary before an instruction in the forbidden instruction area (INC) can be executed.

3. A numerical control method, for executing numerical control in accordance with a control program, on numerical control apparatus comprising:-
a processor (102a),
a program memory (102b) storing a numerical control program, and
a data memory (102c) storing data for control,
in which method said data memory (102c) stores numerical control data and has a parameter area (PM) storing a machining program programmed in the form of parameters or user macros, there being provided, in the parameter area (PM), a security area (A) storing a secret number, and a forbidden instruction area (INC) storing instructions the execution of which can be conditional upon the entry by a user of an input number agreeing with said secret number.

4. A method as claimed in claim 3, wherein the data memory (102c) has a data area (DA) including a flag area (KF) storing flag data, the method being such that when the flag data has a first value, indicating an "unlocked" state, the instructions in the forbidden instruction area (INC) can be executed regardless of agreement or non-agreement between the secret number and the input number entered by the user, whereas when the flag data has a second value, indicating a "locked" state, agreement is necessary before an instruction in the forbidden instruction area (INC) can be executed.

**Patentansprüche**

1. Numerische Steuervorrichtung mit
einem Prozessor (102a),
einem ein numerisches Steuerprogramm speichernden Programmspeicher (102b),
einem Daten zur Steuerung speichernden Datenspeicher (102c), wobei der Datenspeicher (102c) numerische Steuerdaten speichert und einen Parameterbereich (PM) zum Speichern eines in Form von Parametern oder Benutzermakros programmierten Arbeitsprogramms aufweist, wobei in dem Parameterbereich (PM) ein Sicherheitsbereich (A) zum Speichern einer Geheimzahl und ein verbotener Befehlsbereich (INC) zum Speichern von Befehlen, deren Ausführung vom Eingang einer mit der Geheimzahl übereinstimmenden Eingabezahl abhängig sein kann, vorgesehen ist,
wobei die Vorrichtung außerdem eine einen Benutzer zum Eingeben der Eingabezahl befähigende Einrichtung (102d) aufweist.

2. Vorrichtung nach Anspruch 1, wobei der Datenspeicher (102c) einen Datenbereich (DA) mit einem Kennzeichendaten speichernden Kennzeichenbereich (KF) aufweist, wobei die Vorrichtung derart betreibbar ist, daß bei einem ersten, einer "geöffneten" Zustand anzeigenden Wert der Kennzeichendaten die Befehle in dem verbotenen Befehlsbereich (INC) ausgeführt werden können, unbeachtet der Übereinstimmung oder Nichtübereinstimmung von Geheimzahl und vom Benutzer eingegebener Eingabezahl, wohingegen bei einem zweiten, einen "geschlossenen" Zustand anzeigenden Wert der Kennzeichendaten eine Übereinstimmung notwendig ist, bevor ein Befehl in dem verbotenen Befehlsbereich (INC) ausgeführt werden kann.

3. Numerisches Steuerverfahren zum Ausführen einer numerischen Steuerung entsprechend einem Steuerprogramm bei einer numerischen Steuervorrichtung mit
einem Prozessor (102a),
einem ein numerisches Steuerprogramm speichernden Programmspeicher (102b),
einem Daten zur Steuerung speichernden Datenspeicher (102c), bei welchem Verfahren der Datenspeicher (102c) numerische Steuerdaten speichert und einen ein in Form von Parametern oder Benutzermakros programmiertes Arbeitsprogramm speichernden Parameterbereich (PM) aufweist, wobei in dem Parameterbereich (PM) ein eine Geheimzahl speichernder Sicherheitsbereich (A) und ein Befehl, deren Ausführung von der Eingabe einer mit der Geheimzahl übereinstimmenden Eingabezahl durch einen Benutzer abhängig sein kann, speichernder verbotener Befehlsbereich (INC) vorgesehen ist.

4. Verfahren nach Anspruch 3, wobei der Datenspeicher (102c) einen Datenbereich (DA) mit einem Kennzeichendaten speichernden Kennzeichenbereich (KF) aufweist, wobei das Verfahren derart ist, daß bei einem ersten, einen "geöffneten" Zustand anzeigenden Wert der Kennzeichendaten die Befehle in dem verbotenen Befehlsbereich (INC) unbeachtet einer Übereinstimmung oder Nichtübereinstimmung von Geheimzahl und vom Benutzer eingegebener Eingabezahl ausgeführt werden, wohingegen bei einem zweiten, einen "geschlossenen" Zustand anzeigenden Wert der Kennzeichendaten eine Übereinstimmung notwendig ist, bevor ein Befehl in dem verbotenen Befehlsbereich (INC) ausgeführt werden kann.

**Revendications**

1. Dispositif de commande numérique comprenant:
un processeur (102a),
une mémoire de programme (102b) stockant un programme de commande numérique, et
une mémoire de données (102c) stockant les doonées destinées à la commande,
ladite mémoire de données (102c) stockant des données de commande et comprenant une zone à paramètres (pM) pour stocker un programme d'usinage programmé sous forme de paramètres ou de macrofonctions d'utilisateurs, dispositif dans lequel sont prévues, dans la zone à paramètres (PM), une zone de sécurité (A) pour y stocker un nombre secret, et une zone pour instructions interdites (INC) destinée à stocker des instructions dont l'exécution peut être conditionnelle après entrée d'un nombre d'entrée en accord avec ledit nombre secret,
le dispositif comprenant en outre des moyens (102d) permettant à un utilisateur d'entrer le nombre d'entrée.

2. Dispositif selon la revendication 1, dans lequel la mémoire de données (102c) comprend une zone à données (DA) comportant une zone à drapeau (KF) stockant une donnée de drapeau, le dispositif pouvant être utilisé de manière que lorsque la zone à drapeau présente une première valeur indiquant un état "débloqué", les instructions de la zone d'instructions interdites (INC) peuvent être exécutées, qu'il y ait accord ou non accord entre le nombre secret et le nombre d'entrée entré par l'utilisateur, alors que lorsque la donnée de drapeau présente une seconde valeur indiquant un état "bloqué", l'accord est nécessaire avant qu'une instruction de la zone à instructions interdites (INC) puisse être exécutée.

3. Procédé de commande numérique pour exécuter une commande numérique en accord avec un programme de commande, sur un dispositif de commande numérique comprenant:
un processeur (102a),
une mémoire de programme (102b) stockant un programme de commande numérique, et
une mémoire de données (102c) stockant les données destinées à la commande,
procédé dans lequel ladite mémoire de données (102c) stocke des données de commande numérique et comprend une zone à paramètres (PM) stockant un programme d'usinage programmé sous forme de paramètres ou de macrofonctions d'utilisateurs, procédé dans lequel sont prévues, dans la zone à paramètres (PM), une zone de sécurité (A) stockant un nombre secret, et une zone pour instructions interdites (INC) stockant des instructions dont l'exécution peut être conditionnelle après entrée par un utilisateur d'un nombre d'entrée en accord avec ledit nombre secret.

4. Procédé selon la revendication 3, dans lequel la mémoire de données (102c) comprend une zone à données (DA) comportant une zone à drapeau (KF) stockant une donnée de drapeau, le procédé étant tel que lorsque la donnée de drapeau présente une première valeur, indiquant un état "non bloqué", les instructions de ls zone à instructions interdites (INC) puissent être exécutées qu'il y ait accord ou non accord entre le nombre secret et le nombre d'entrée entré par l'utilisateur, alors que lorsque la donnée de drapeau présente une seconde valeur indiquant un état "bloqué", l'accord est nécessaire avant qu'une instruction se trouvant dans la zone à instructions interdites (INC) puisse être exécutée.

Fig. 1

EP 0 120 975 B1

# Fig. 2

# Fig. 3

# Fig. 4